# DEMANDE DE BREVET EUROPEEN

(11) **EP 1 938 683 A1**
(43) Date de publication de la demande: **02.07.2008**
(21) Numéro de dépôt: 07150286.8
(22) Date de dépôt: 21.12.2007
(51) Int. Cl.: A01K 27/00

(54) **Collier réglable en longueur pour animal domestique**

(30) Priorité: 27.12.2006 FR 0611507
(71) Demandeur: Bellezza, François, 57410 Rohrbach les Bitche (FR)
(72) Inventeur: Bellezza, François, 57410 Rohrbach les Bitche (FR)
(74) Mandataire: Vièl, Frédérique

(57) **Abrégé**

L'invention concerne un collier (200) pour animal domestique constitué d'une lanière dont les extrémités sont jointes pour former un collier fermé, des moyens de réglage étant prévus pour régler la circonférence du collier en position fermée et des moyens de retenue étant prévus pour maintenir le collier dans la position fermée à la circonférence souhaitée.

Les moyens de réglage comprennent un premier enrouleur (230) automatique sur lequel peut s'enrouler une première extrémité (260) de la lanière (220,260). Ainsi, la lanière peut s'enrouler au moins en partie autour de l'enrouleur, permettant ainsi d'ajuster la longueur du collier au cou de l'animal.

Dans un mode de réalisation privilégié de l'invention, les moyens de réglage comprennent un second enrouleur automatique sur lequel peut s'enrouler la seconde extrémité (260) de la lanière (220,260).

## Description

L'invention concerne un collier pour animal domestique constitué d'une lanière dont les extrémités peuvent être jointes pour former un collier fermé, des moyens de réglage étant prévus pour régler la circonférence du collier en position fermée et des moyens de retenue étant prévus pour maintenir le collier dans la position fermée à la circonférence souhaitée.

On connaît de nombreux colliers pour animaux domestiques. Le plus courant est constitué d'une sangle, en cuir ou en nylon, dont l'une des extrémités est percée de trous et dont l'autre extrémité est munie d'une boucle à travers laquelle peut passer la première extrémité. Une ou plusieurs pointes de la boucle sont alors introduites dans le ou les trous correspondant à la circonférence adaptée au cou de l'animal.

L'inconvénient de ce collier, semblable à une ceinture, réside dans le fait qu'il faut les réaliser dans différentes tailles pour tenir compte des différentes tailles d'animaux concernés. En effet, il n'est pas possible que l'extrémité libre sortant de la boucle soit trop longue.

On a donc proposé des colliers de longueur réglable dans lesquels la première extrémité de la sangle est munie d'un premier moyen de fixation et la seconde extrémité se rabat sur elle-même, le second moyen de fixation étant placé sur la boucle formée par l'extrémité rabattue sur elle-même. Des moyens sont prévus pour permettre à la seconde extrémité de coulisser sur la sangle pour régler la longueur du collier. On peut donc ajuster la longueur du collier à la taille souhaitée sans pour autant permettre de doubler la longueur du collier entre la position la plus courte et la position la plus longue.

Ces colliers réglables présentent cependant de nombreux inconvénients. En raison des moyens de réglage de la longueur peu résistants, ils ne sont pas adaptés aux animaux pouvant exercer une traction importante sur leur laisse. En effet, la boucle et/ou le système de fermeture risquent de casser.

De plus, les moyens de réglage de la longueur sont constitués généralement par une boucle à trois barres transversales. L'extrémité libre de la sangle est cousue sur elle-même après être passée sur la barre transversale centrale et la sangle est passée autour de cette même barre centrale en passant sous les deux barres extérieures. Autrement dit, au niveau de cette boucle, on peut avoir jusqu'à trois épaisseurs de sangle plus l'épaisseur de la boucle. De plus, pour permettre à la boucle de « s'aplatir » au niveau des moyens de fermeture, il faut que le matériau utilisé soit suffisamment souple. De plus, afin de permettre le réglage de la longueur du collier, celui-ci ne doit pas être muni de décors tridimensionnels. Ces colliers sont donc en général d'un esthétisme particulièrement sobre.

Par ailleurs, tous ces colliers nécessitent beaucoup de place pour leur rangement, en général pendus à des crochets.

L'objectif de l'invention est donc de proposer un collier réglable en longueur tout en permettant de couvrir une plus grande fourchette de longueur, proche du simple au double tout en restant esthétique et en étant suffisamment résistant pour être appliqué à des animaux exerçant une traction importante sur leur laisse.

Cet objectif est atteint conformément à l'invention du fait que les moyens de réglage comprennent un premier enrouleur automatique sur lequel peut s'enrouler une première extrémité de la lanière. Ainsi, la lanière peut s'enrouler au moins en partie autour de l'enrouleur, permettant ainsi d'ajuster la longueur du collier au cou de l'animal.

Dans un mode de réalisation privilégié de l'invention, les moyens de réglage comprennent un second enrouleur automatique sur lequel peut s'enrouler la seconde extrémité de la lanière. Dans la pratique, il est avantageux que le premier enrouleur et le second enrouleur soient constitués par un seul et même enrouleur. Ainsi, la longueur du collier peut être réglée des deux côtés. Cela sera avantageux notamment si des décors sont prévus, pour que ceux-ci soient répartis symétriquement autour du cou de l'animal.

Il est particulièrement pratique si la lanière est constituée d'une bande principale dont la première ou les deux extrémités se prolongent chacune par un câble qui seul vient s'enrouler sur le premier ou sur chacun des enrouleurs. Ainsi, une partie du collier sera réalisée par exemple par une sangle qui se prolongera d'un côté ou des deux par des câbles qui seuls iront s'enrouler sur l'enrouleur. On pourra ainsi diminuer considérablement les dimensions de l'enrouleur par rapport à un enrouleur où toute la sangle doit s'enrouler.

Afin d'éviter de blesser ou de gêner l'animal avec les câbles, plusieurs moyens de protection sont proposés.

Une première solution consiste à faire passer le ou les câbles à travers une sangle dont la première extrémité est fixée à la bande principale et la seconde est fixée au niveau de l'enrouleur correspondant, la sangle étant au moins aussi longue que le câble et traversée plusieurs fois par celui-ci de telle sorte qu'en position serrée, la sangle se replie au moins partiellement en formant un accordéon. Cet accordéon protège le cou de l'animal en évitant un contact direct du câble sur son cou. Cette sangle n'a pas de fonction de retenue, elle pourra donc être choisie plus fine et plus légère que la bande principale.

Dans le cas de l'usage de deux sangles plissées de part et d'autre de l'enrouleur, il est préférable que leurs extrémités opposées à la bande principale se rejoignent sur la face extérieure du collier, les deux sangles ne formant de préférence qu'une seule pièce.

Un autre moyen de protection peut être réalisé à l'aide d'une première bande secondaire située sur la face intérieure du collier et fixée au premier ou au moins à l'un des enrouleurs, de préférence de façon symétrique par rapport aux enrouleurs, les extrémités de la bande secondaire pouvant être munies chacune d'un passant entourant la lanière de façon à que cette dernière puisse coulisser librement dans le passant.

Pour permettre la mise en place de décors tridimensionnels, il est prévu de munir le collier d'une deuxième bande secondaire située sur la face extérieure du collier et fixée au premier ou au moins à l'un des enrouleurs, de préférence de façon symétrique par rapport aux enrouleurs, ou s'il y en a une, par rapport à la première bande secondaire, les extrémités de la bande secondaire pouvant être munies chacune d'un passant entourant la lanière de façon à que cette dernière puisse coulisser librement dans le passant.

Il est préférable que la première bande secondaire et la deuxième bande secondaire ne forment qu'une seule pièce, de préférence en matière plastique.

Afin de bloquer la longueur du collier, il est préférable de munir le ou les enrouleurs chacun de moyens pour bloquer la lanière ou le câble dans la position souhaitée. Ces moyens de blocage peuvent comprendre deux tiges parallèles entre elles, de préférence parallèles ou perpendiculaire à l'axe de l'enrouleur automatique correspondant, la première tige étant fixe tandis que la seconde peut se translater radialement entre deux positions, une première position débloquée éloignée de la première tige, laissant la lanière ou le câble libre de s'enrouler ou se dérouler de l'enrouleur, et une seconde position bloquée proche de la première tige, bloquant entre elles la lanière ou le câble qui ne peut plus s'enrouler ou se dérouler de l'enrouleur automatique, des moyens étant prévus pour translater la seconde tige entre les deux positions extrêmes.

L'un des enrouleurs peut être muni de moyens pour fixer une laisse, de préférence un anneau, et/ou en ce qu'une bande de protection est placée sur la face intérieure du collier au niveau du ou des enrouleurs.

Le collier selon l'invention peut être utilisé comme harnais. Pour cela, il est prévu de le munir d'une seconde lanière dont les extrémités peuvent être jointes pour former un collier fermé autour du thorax de l'animal, ladite seconde lanière étant munie de moyens de réglage pour régler la circonférence de cette seconde lanière en position fermée et de moyens de retenue étant prévus pour maintenir la seconde lanière dans la position fermée à la circonférence souhaitée, les moyens de réglage comprenant un enrouleur automatique sur lequel peut s'enrouler une première extrémité de la seconde lanière. Dans la pratique, les deux lanières auront de préférence les mêmes caractéristiques, même si elles ne sont pas dimensionnées de la même manière.

Pour rendre le collier plus esthétique, il est préférable de munir le collier d'au moins une bande décor amovible, cette bande décor amovible étant de préférence constituée par la seconde bande secondaire et/ou par une bande distincte pouvant se fixer sur la seconde bande secondaire et/ou par un bande distincte pouvant se fixer sur la bande principale.

Afin d'éviter que la bande principale ne se bloque lorsqu'elle coulisse par rapport à la première et/ou la seconde bandes secondaires, il est préférable de prévoir des moyens de guidage entre la bande principale et la première et/ou la deuxième bandes secondaires. Ces moyens de guidage sont par exemple constitués par deux éléments en I, en U ou en S reliés ensembles par l'extrémité de leur branches à l'aide de deux tiges de liaison, les premières branches des U ou des S ou la première extrémité des I, passant chacune à travers une fente réalisée dans l'une au moins des bandes secondaires, les autres branche des U ou des S, ou les autres extrémités des I, passant chacune à travers un trou réalisé à l'extrémité de la bande principale, les tiges de liaison étant fixées à l'extrémité des branches des U ou des S, ou aux extrémités des I.

L'invention est décrite plus en détail à l'aide des exemples de réalisation présentés ci-dessous à l'aide des figures, lesquelles montrent :
- Figure 1 :: Schéma de principe d'un premier mode de réalisation du collier conforme à l'invention a) en position totalement enroulée et b) en position partiellement serrée ;
- Figure 2 :: Schéma de principe d'un second mode de réalisation de l'invention a) en position entièrement déroulée, b) en position partiellement serrée et c) en position totalement serrée ;
- Figure 3 :: Schéma de principe d'un troisième mode de réalisation de l'invention a) en position grande ouverte, b) en position partiellement serrée et c) en position totalement serrée ;
- Figure 4 :: Schéma de principe de l'enrouleur et du dispositif de blocage a) en perspective, b) le mécanisme interne en perspective et c) en vue de dessus ;
- Figure 5 :: Schéma de principe d'un deuxième exemple de réalisation d'un enrouleur et du dispositif de blocage a) en perspective, b) le mécanisme interne en position débloquée et c) le mécanisme interne en position bloquée ;
- Figure 6 :: Vue schématique d'un collier muni de moyens de guidage ;
- Figure 7 :: Schéma de principe des moyens de guidage.

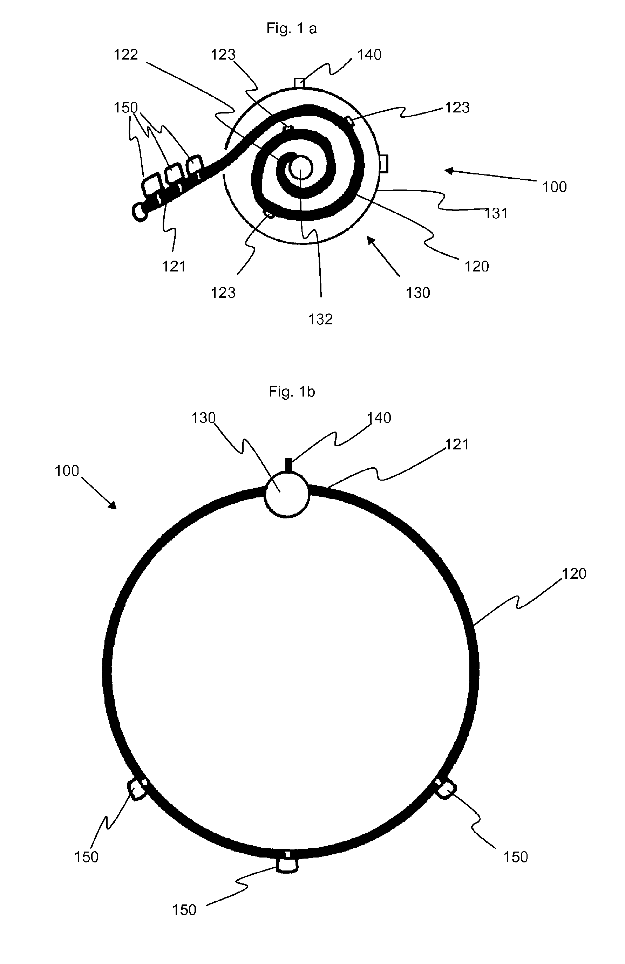

Dans le mode de réalisation le plus simple montré à la figure 1, le collier (100) comprend une bande principale (120) dont l'une des extrémités (121) peut être fixée au boîtier (131) de l'enrouleur (130) tandis que l'autre extrémité (122) est fixée sur l'axe (132) de l'enrouleur (130). Un anneau (140) est fixé sur l'enrouleur automatique (130) pour permettre la pose de la laisse.

L'enrouleur automatique (130), en l'absence de contrainte, tend à enrouler toute la bande principale (120). Autrement dit, lors du rangement, le collier (100) se présente sous la forme d'un boîtier (131) dont ne dépasse qu'une languette (121), comme le montre la figure 1a. Son rangement est donc beaucoup plus commode. Comme on le voit, la longueur du collier peut aller de zéro à toute la longueur, en fonction des besoins. Il n'est donc plus nécessaire d'avoir une grande gamme de colliers pour les différentes tailles d'animaux. Un seul modèle peut servir à plusieurs tailles d'animaux.

Lors de la pose du collier, la bande (120) est déroulée autant que nécessaire de l'enrouleur en surmontant la force d'enroulement de l'enrouleur automatique (130), puis le collier (100) est passé autour du cou de l'animal avant que l'extrémité libre (121) ne soit fixée sur le boîtier (131) de l'enrouleur (130). Une fois la bande relâchée, l'enrouleur rembobine celle-ci jusqu'à ce que la résistance due au cou de l'animal soit supérieure à la force d'enroulement de l'enrouleur automatique. Il va de soi que la force d'enroulement de l'enrouleur automatique (130) est réglée pour ne pas risquer de blesser ou de gêner l'animal. Une fois le collier à la bonne longueur, des moyens de blocage, non représentés ici, sont actionnés pour empêcher la sangle de se dérouler par exemple lorsque l'animal tire sur sa laisse.

Pour permettre la pose de décors (150), il est prévu de placer sur la bande (120) des petits ergots (123) suffisamment fins pour ne pas gêner l'enroulement de la bande dans l'enrouleur automatique (130), mais suffisamment épais pour permettre, lors du déroulement de la bande (120), d'entraîner avec eux des objets décoratifs (150) présentant des gorges correspondantes. Au moment de l'enroulement de la bande pour le rangement, les éléments décoratifs sont retenus à l'extérieur du boîtier (131) et les ergots (123) sortent des gorges dans lesquelles ils s'étaient engagés lors du déroulement de la bande permettant à la bande de continuer à s'enrouler.

Il est également possible de prévoir la bande principale (120) en deux pièces, chacune de ces demi-bandes pouvant s'enrouler sur un enrouleur automatique par l'une de ses extrémités. Les deux enrouleurs pourront être réunis en un seul enrouleur enroulant les deux bandes l'une sur l'autre.

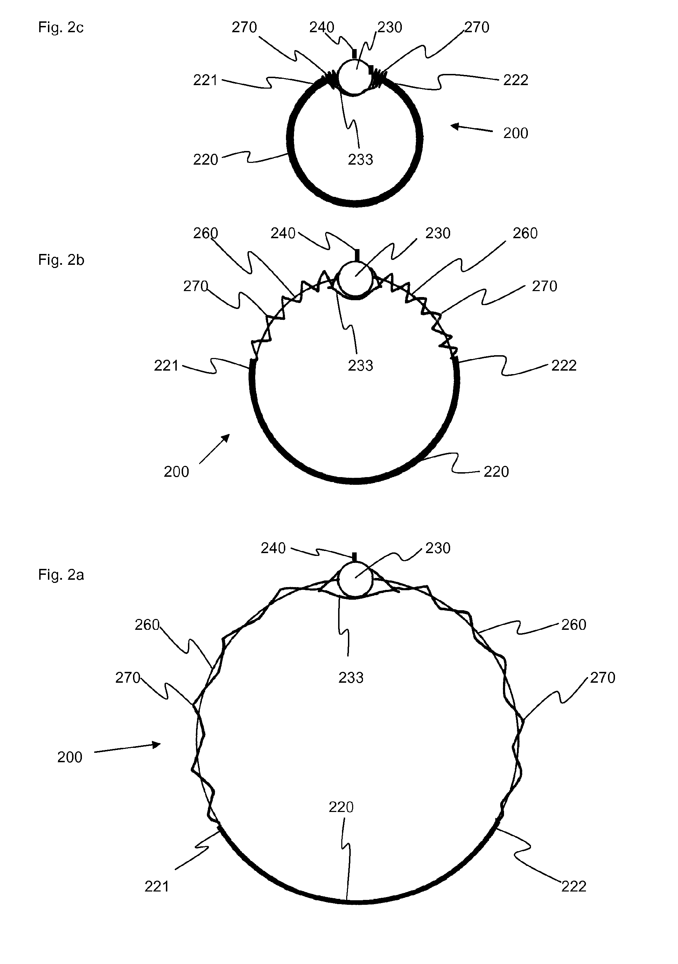

Un deuxième mode de réalisation de l'invention est présenté à la figure 2. Ce collier (200) est constitué d'une bande principale (220) dont chacune des extrémités (221, 222) se prolonge par un câble (260) dont l'autre extrémité est fixée à l'axe d'un enrouleur automatique (230). Pour simplifier le collier (200), les deux câbles sont enroulés autour d'un seul et même enrouleur (230). Il serait cependant possible de prévoir deux enrouleurs indépendants.

Pour éviter que le cou de l'animal ne soit blessé ou seulement gêné par les câbles (260), il est prévu que chacun d'entre eux passe plusieurs fois à travers une sangle (270). Pour des raisons de simplicité, il est préférable que les deux sangles ne soient en fait constituées que d'une seule et même sangle passant de préférence sur la face extérieure de l'enrouleur (230). La longueur de la ou des sangles (270) est telle qu'elle ne gêne pas le déroulement total des câbles (260) hors de l'enrouleur (230). La figure 2a montre le collier en position totalement déroulée. En position partiellement enroulée ou totalement enroulée, représentées aux figures 2b et 2c, la sangle (270) se replie en accordéon, entraînée par la bande principale (220), elle-même entraînée par les câbles (260) s'enroulant autour de l'enrouleur automatique (230).

En position totalement serrée représentée à la figure 2c, le collier n'a pratiquement plus que la longueur de la bande principale (220) et de l'enrouleur (230). Au contraire, en position totalement déroulée représentée à la figure 2a, le collier (200) a la longueur de la bande principale (220), des deux câbles (260) et de l'enrouleur (230). Il est donc possible dans ce mode de réalisation d'avoir un collier dont la longueur peut varier plus que du simple au double. La sangle (270) n'ayant pas de fonction de retenue, fonction assurée par la bande principale (220), les câbles (260) et l'enrouleur (230), elle peut être choisie assez fine et légère pour permettre un bon plissé et éviter à l'animal un poids supplémentaire sensible.

Enfin, une bande de protection (233) peut être fixée sur la face interne du collier au niveau de l'enrouleur (230) pour protéger le cou de l'animal et éviter que des poils ne soient entraînés dans l'enrouleur (230).

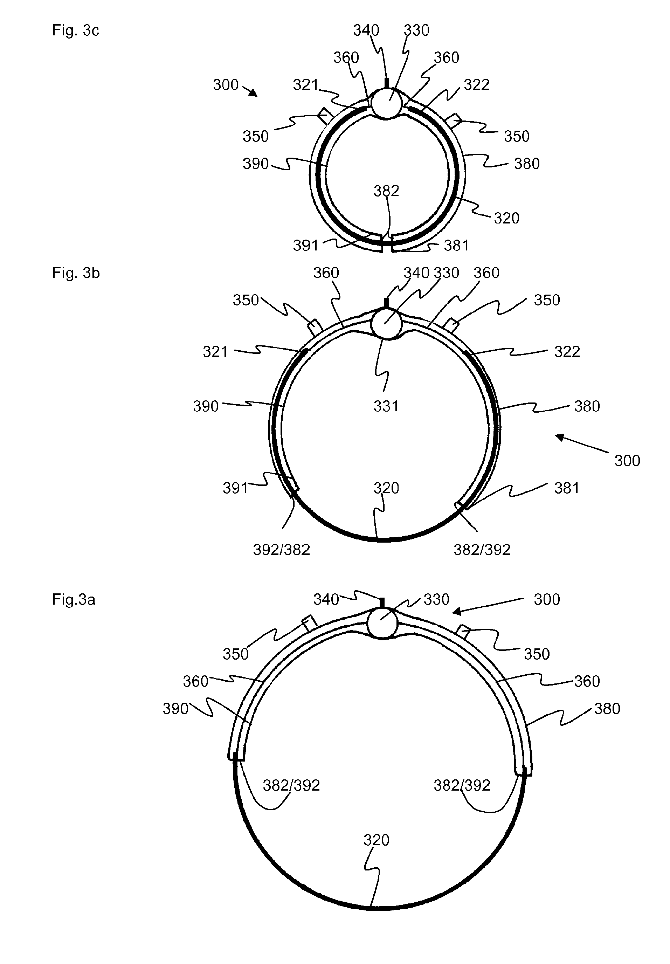

La figure 3 montre un troisième exemple de réalisation de l'invention. Comme dans l'exemple précédent, le collier (300) est constitué d'une bande principale (320) dont chacune des extrémités (321, 322) se prolonge par un câble (360) dont l'autre extrémité est fixée à l'axe d'un enrouleur automatique (330). Pour simplifier le collier (300), les deux câbles (360) sont enroulés autour d'un seul et même enrouleur (330). Il serait cependant possible de prévoir deux enrouleurs indépendants.

Une première bande secondaire (390) peut être placée à l'intérieur du collier (300). À chacune de ses extrémités (391), la première bande secondaire (390) est munie de passants (392) au travers desquels peut coulisser librement la bande principale (320). Cette première bande secondaire (390) peut être fixée au boîtier (331) de l'enrouleur automatique (330), de préférence de façon symétrique par rapport à l'enrouleur automatique (330). La première bande secondaire (390) sert essentiellement à protéger le cou de l'animal en évitant le contact direct entre les câbles (360) et le pelage de l'animal.

Une deuxième bande secondaire (380) est placée sur la face extérieure du collier (300). À chacune de ses extrémités (381), la deuxième bande secondaire (380) est munie de passants au travers desquels peut coulisser librement la bande principale (320). Il est préférable de fixer cette deuxième bande secondaire (380) au boîtier (331) de l'enrouleur automatique (330), de préférence de façon symétrique par rapport à l'enrouleur automatique (330). Il est possible par exemple de placer des éléments décoratifs (350) sur cette première bande secondaire (380).

Si le collier est muni de deux bandes secondaires (380, 390) comme dans l'exemple présenté ici, celles-ci peuvent être reliées ensemble par des passants communs (382). Il est également possible de coudre ensemble ces deux bandes secondaires (380, 390) par deux coutures latérales. Dans tous les cas, les câbles (360) et les extrémités (321, 322) de la bande principale (320) se trouvent pris en sandwich entre les deux bandes secondaires (380, 390). Ces bandes secondaires n'ont pas de fonction de retenue, elles peuvent donc être réalisées dans un matériau de résistance moindre.

Avec ce mode de réalisation, il est possible d'avoir un collier dont la longueur peut varier quasiment du simple au double tout en permettant la mise en place de décors tridimensionnels.

Il va de soi qu'il est possible d'appliquer le principe de la deuxième bande secondaire (380) au collier (200) à sangle en accordéon (270) de la figure 2, en renonçant à la première bande secondaire (390).

De même, il est possible d'appliquer cette deuxième bande secondaire (380) sur un collier du type de celui du premier exemple, qu'il soit à un ou deux enrouleurs. La bande principale étant suffisamment large, il n'est pas nécessaire de prévoir des moyens de protection à l'intérieur du collier.

Il est à noter que les moyens de protection, tels que la sangle en accordéon (270), la première bande secondaire (390) ou la bande de protection (233), ne sont pas indispensables, même lorsque le collier (200, 300) comprend des câbles (260, 360). En effet, lorsque l'animal domestique tire sur sa laisse, son cou prend appui sur la partie avant du collier, à savoir sur la bande principale (220, 320), les câbles n'étant pratiquement pas en contact avec le cou de l'animal dans cette position. Ce n'est qu'au moment où la laisse n'est plus sous tension que le collier se répartit librement autour du cou de l'animal et que par conséquent les câbles (260, 360) peuvent être en contact avec le pelage.

Il ressort de la description précédente d'exemples de réalisation de l'invention que le collier est constitué d'une lanière qui peut prendre plusieurs formes. Dans le premier exemple de réalisation, la lanière a la forme de la bande principale (120) dont l'une des extrémités s'enroule sur l'enrouleur (130). Dans les deux exemples suivants, la lanière à la forme d'une bande principale (220, 320) qui se prolonge à ses deux extrémités par un câble (260, 360) dont l'extrémité opposée à la bande principale s'enroule sur un enrouleur (230, 330). Dans le premier mode de réalisation, il est prévu des moyens pour joindre l'extrémité libre de la lanière (120) et le boîtier de l'enrouleur (130). Dans les autres cas, il n'est en général pas nécessaire de prévoir de tels moyens de fermeture, il suffit d'écarter suffisamment le collier pour pouvoir laisser passer la tête de l'animal. Cependant, rien n'empêche de prévoir de tels moyens de fermeture, notamment lorsque le collier est destiné à des animaux aux oreilles fragiles.

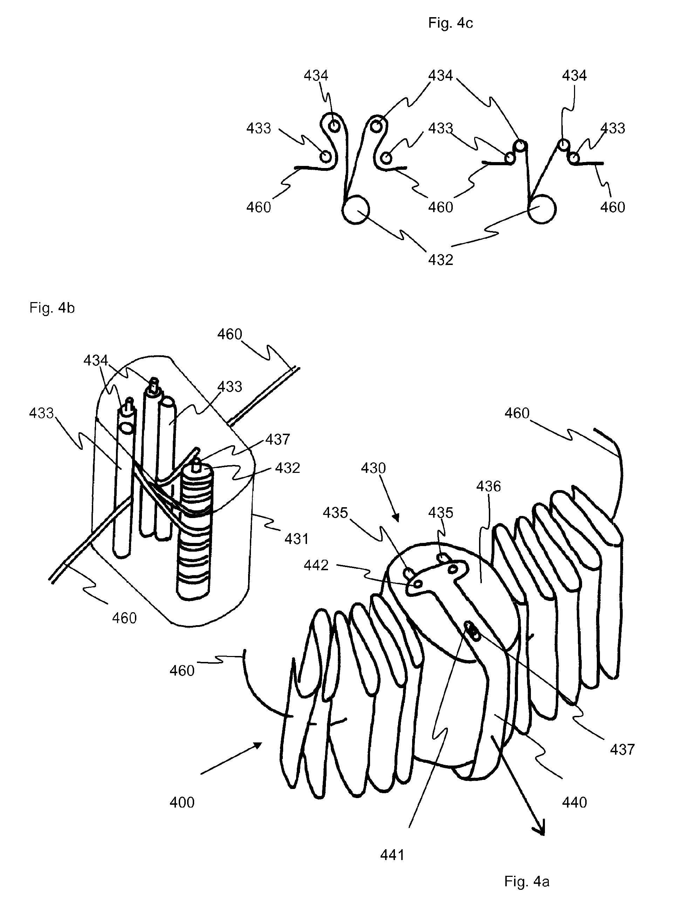

La figure 4 montre un exemple de réalisation de moyens de blocage pour les enrouleurs automatiques conformes à l'invention. L'enrouleur (430) est muni d'un boîtier (431) à l'intérieur duquel est placé l'axe (432) de l'enrouleur et son mécanisme d'enroulement. De tels mécanismes d'enroulement sont déjà connus, par exemple des laisses à enrouleurs.

La figure 4 montre l'enrouleur (430) vu du côté extérieur au collier (400). Pour chaque câble (460), il est prévu deux tiges de blocage : une tige fixe (433) et une tige pouvant se déplacer en translation (434). Le câble passe d'abord autour de la tige fixe (433), puis autour de la tige mobile (434) avant d'aller s'enrouler autour de l'axe d'enroulement (432). Les deux tiges (433, 434) sont essentiellement parallèles entre elles et parallèles à l'axe d'enroulement (432). L'axe mobile (434) peut se déplacer entre une position débloquée dans laquelle les deux tiges sont suffisamment éloignées l'une de l'autre en laissant le câble (460) glisser librement pour s'enrouler sur l'axe d'enroulement (432) ou s'en dérouler (gauche de la figure 4c), et une position de blocage dans laquelle les deux tiges sont suffisamment proches l'une de l'autre pour coincer entre elle le câble (460) de sorte qu'il ne peut plus ni s'enrouler sur l'axe (432) ni s'en dérouler (droite de la figure 4c). La section transversale des tiges (433, 434) pourra par exemple être cannelée pour assurer un meilleur maintien du câble (460).

Le déplacement de la tige mobile (434) peut se faire manuellement. Cependant, en alignant les tiges (433, 434) l'une derrière l'autre de sorte que la tige mobile (434) soit, vu de l'axe d'enroulement (432), plus éloignée que la tige fixe (433) comme le montrent les figures 4b ou 4c, il est également possible de provoquer le blocage de l'enrouleur en exerçant une traction brusque sur l'enrouleur vers l'extérieur du collier selon la flèche de la figure 4a.

L'anneau servant à accrocher la laisse (440) peut servir au déplacement des tiges mobiles (434).

Pour cela, les tiges mobiles (434) ont leurs extrémités qui saillent hors du boîtier (431) de l'enrouleur (430) en passant chacune à travers une fente longitudinale (435) conçue pour permettre la translation des tiges mobiles (434) entre leurs deux positions extrêmes. L'anneau pour la laisse (440) a essentiellement une forme en U, la barre transversale du U étant sensiblement parallèle à l'axe d'enroulement (432) et les deux branches du U étant fixées sur les parois sommitales (436) du boîtier (431). Pour cela, chaque branche du U est munie d'une fente (441) au travers de laquelle passe un ergot (437) du boîtier (431) de l'enrouleur (430). Ces ergots (437) peuvent être constitués par les deux extrémités saillantes de l'axe d'enroulement (432). Par ailleurs, les extrémités des branches en U sont munies chacune de deux trous (442) dans lesquels pénètrent les extrémités des tiges mobiles (434).

Comme on le voit, une traction vers l'extérieur sur l'anneau (440) dans le sens de la flèche de la figure 4a provoque le rapprochement des tiges mobiles (434) en direction des tiges fixes (433) et donc le blocage des câbles (460) dans leur position actuelle. Au contraire, une poussée sur l'anneau (440) dans le sens opposé à la flèche de la figure 4a provoque l'éloignement des tiges mobiles (434) et donc la libération des câbles (460). Plus l'animal tire sur sa laisse, plus les tiges mobiles (434) sont rapprochées des tiges fixes (433), bloquant d'autant plus les câbles (460). Ce mode de réalisation est donc un facteur de sécurité supplémentaire.

Les tiges (433, 434) peuvent être bloqués en rotation ou au contraire être libres de tourner sur elles-mêmes.

Cet exemple de réalisation est illustré pour des câbles (460), mais il va de soi qu'il peut s'appliquer aussi bien à des sangles comme celles utilisées dans le premier exemple de la figure 1. De même, il est prévu deux câbles, mais il peut tout aussi bien être réalisé qu'avec un seul câble ou une seule sangle. Au lieu d'utiliser un enrouleur commun pour les deux câbles, il est également possible de prévoir deux enrouleurs distincts.

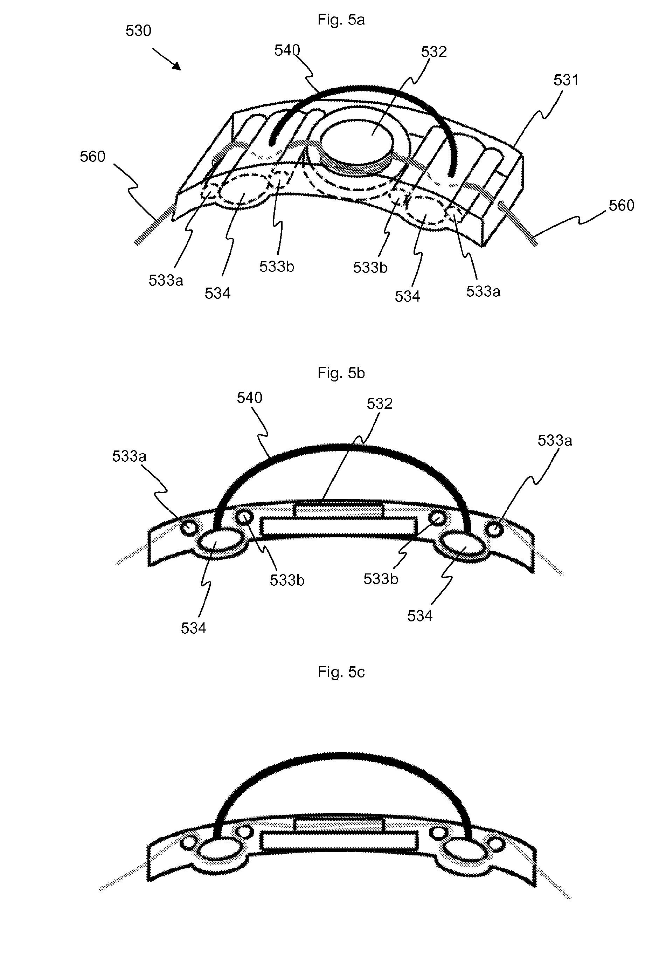

La figure 5 montre un deuxième exemple de réalisation de moyens de blocage (530). Dans cet exemple, il est prévu pour chaque câble (560) trois tiges. Deux tiges (533a, 533b) sont fixes tandis que la troisième (534) est mobile. Les deux tiges mobiles (534) sont reliées ensemble par un arceau (540) qui peut tenir lieu d'anneau pour la laisse. Les tiges (533a, 533b, 534) sont disposées parallèlement à l'axe central du collier. La distance entre les deux tiges fixes (533a, 533b) est inférieure au diamètre ou à la largeur de la tige mobile (534) de sorte que cette dernière (534) ne peut pas passer entre les deux tiges fixes (533a, 533b). L'axe de l'enrouleur (532) est perpendiculaire aux tiges (533a, 533b, 534). Il peut être choisi relativement large, mais de faible hauteur. Le câble passe sur la face extérieure des tiges fixes (533a, 533b) et sur la face intérieure de la tige mobile (534).

Les tiges mobiles et les tiges fixes sont parallèles entre elles. Cela signifie que les parties de leurs surfaces qui coopèrent sont parallèles entre elles.

Pour desserrer le collier, il faut appuyer sur l'arceau (540) : les tiges mobiles (534) sont écartées des tiges fixes (533a, 533b) comme sur la figure 5b. Il est alors possible d'enrouler ou de dérouler les câbles (560) de l'enrouleur (532) en tirant sur la bande principale (220, 320) du collier. Le collier est placé sur le cou de l'animal et la bande principale est relâchée. L'enrouleur (532) enroule les câbles (560) jusqu'à ce que la résistance due au cou de l'animal soit supérieure à la force de l'enrouleur (532).

Si l'animal tire sur sa laisse, l'arceau (540) est écarté du boîtier (531) de l'enrouleur, entraînant avec lui les deux tiges mobiles (534), comme le montre la figure 5c. Les tiges mobiles (534) viennent prendre appui contre les deux tiges fixes (533a, 533b) en bloquant le câble (560) entre elles. Pour améliorer l'effet de coincement, la section transversale des tiges pourra par exemple être cannelée.

En principe, si on n'exerce pas de pression sur l'arceau (540), les tiges mobiles (534) ont tendance à être ramenées en position haute (donc serrée) dès que l'on tire sur la bande principale. Par conséquent, sans autre contrainte extérieure, le collier reste automatiquement au bon diamètre.

Les tiges mobiles peuvent avoir une section transversale elliptique comme sur l'exemple de la figure 5, ou au contraire avoir une section ronde, une section en forme de poire (côté queue passant dans l'espace situé entre les deux tiges fixes) ou tout autre forme adéquate, l'important étant que leurs dimensions les empêchent de passer entre les tiges fixes. Les tiges fixes (533a, 533b) peuvent être bloquées en rotation ou au contraire être libres de tourner sur elles-mêmes. Les tiges mobiles lorsqu'elles ont une section ronde peuvent également si nécessaire être libres de tourner sur elles-mêmes.

Il serait possible de n'utiliser qu'une tige fixe par câble comme dans l'exemple de réalisation de la figure 4. Pour cela, il serait préférable de prévoir des moyens de guidage des tiges mobiles (534) pour les empêcher de passer par-dessus les tiges fixes (533) après déformation de l'arceau (540).

Dans tous les exemples de réalisation présentés ici, l'anneau destiné à la laisse (140, 240, 340, 440) est placé sur le boîtier de l'enrouleur (130, 230, 330, 430). Cependant, il peut aussi être conçu mobile sur la lanière, ou encore être fixé sur la bande principale (220, 320) par exemple à l'opposé de l'enrouleur (230, 330).

Afin de décorer le collier, il est possible de concevoir la deuxième bande secondaire (380) de telle sorte qu'elle soit interchangeable. Il est également possible de la munir d'une bande décor amovible qui sera fixée dessus par tout moyen approprié, tel que bande Velcro®, boutons-pression, crochets pouvant se crocheter sous la deuxième bande secondaire (380), etc. De même, la bande principale (220, 320) peut, elle aussi, être doublée par une bande décor amovible.

Pour des raisons de simplification, il est possible de réunir la première bande secondaire (390) et la deuxième bande secondaire (380) en une seule pièce, soit en les fixant l'une à l'autre, par exemple par couture, soit en les réalisant en une seule pièce, notamment sous la forme d'une pièce en matière plastique.

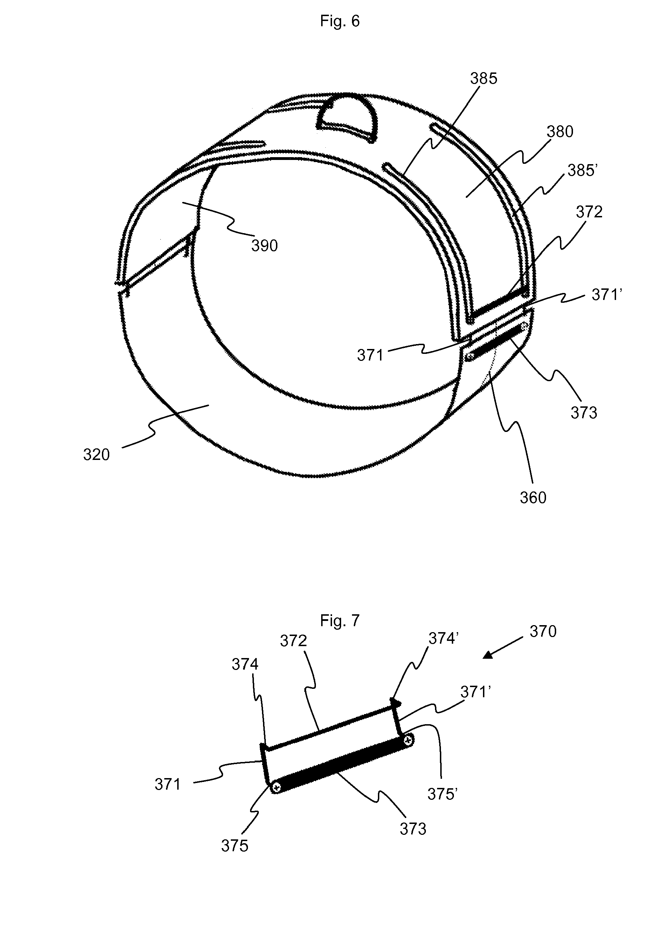

Pour éviter que la bande principale (320) ne se bloque lorsqu'elle coulisse entre la première et la deuxième bande secondaire (380, 390), ou pour mieux la guider contre l'une de ces deux bandes secondaires (380, 390), il est préférable de munir la bande principale (320) de moyens de guidage (370) qui coulissent dans une ou deux fentes de guidage (385, 385') réalisées dans la première ou la deuxième bande secondaire (380, 390). Ces moyens de guidage (370) sont constitués par exemple d'un crochet en double U. Par double U, il faut comprendre que le crochet est constitué de deux éléments en U (371, 371') reliés ensemble par deux tiges de liaison (372, 373). Les branches supérieures (par rapport à la figure 7) (374, 374') des éléments en U (371, 371') passent à travers les fentes de guidage (385, 385') par exemple de la deuxième bande secondaire (380) tandis que la première tige de liaison (372) vient s'appuyer contre la face extérieure de la deuxième bande secondaire (380). Les deux autres branches (375, 375') des éléments en U (371, 371') traversent des trous réalisés dans l'extrémité de la bande principale (320). La deuxième tige de liaison (373) est ensuite fixée, de préférence de façon réversible, sur les extrémités des deux branches inférieures (375, 375') des éléments en U.

La longueur de la base des éléments en U peut être choisie suffisamment courte pour empêcher la bande principale de s'écarter de la bande sur laquelle est placé le crochet en double U et donc assurer toujours un chevauchement des deux bandes. Dans d'autres cas, il peut être au contraire souhaitable de dépasser ce chevauchement. La longueur de la base des éléments en U sera alors choisie plus longue comme sur la figure 6. Cette solution sera privilégiée lorsque l'on souhaite placer une bande décor sur la bande principale.

À la place d'éléments en U comme sur la figure 7, il est possible d'utiliser des éléments en S, les tiges de liaison (372, 373) étant alors placées sur deux faces opposées de la bande principale (320) et de la première ou deuxième bande secondaire (380, 390). Une autre solution consiste à utiliser simplement deux tiges en I dont l'une des extrémités passe dans la fente de guidage et l'autre dans un trou réalisé dans la bande principale.

Le collier conforme à l'invention est donc simple à fabriquer, évite de plier sur soi-même des bandes résistantes ainsi que les surépaisseurs inutiles. Il est possible de décorer ces colliers avec toute sorte de décors tout en assurant toujours une grande gamme de circonférences.

### Liste des références :

- 100: Collier
- 120: Bande principale
121 Extrémité libre
122 Extrémité fixée à l'axe de l'enrouleur
123 Ergots pour décors
- 130: Enrouleur automatique
131 Boîtier de l'enrouleur
132 Axe de l'enrouleur
- 140: Anneau pour la laisse
- 150: Décors

- 200: Collier
- 220: Bande principale
221 Extrémité
222 Extrémité
- 230: Enrouleur automatique
233 Bande de protection
- 240: Anneau pour la laisse
- 260: Câble
- 270: Sangle plissée

- 300: Collier
- 320: Bande principale
321 Extrémité
322 Extrémité
- 330: Enrouleur automatique
331 Boîtier enrouleur
- 340: Anneau pour la laisse
- 350: Décors
- 360: Câble
- 370: Crochet en double U
371 Élément en U
372 Tige de liaison
373 Tige de liaison
374 Première branche du U
375 Deuxième branche du U
- 380: Deuxième bande secondaire
381 Extrémité
382 Passant
385 fente de guidage
385' fente de guidage
- 390: Première bande secondaire

- 400: Collier
- 430: Enrouleur
431 Boîtier de l'enrouleur
432 Axe d'enroulement
433 Tige fixe
434 Tige mobile
435 Fente pour extrémité de la tige mobile
436 Paroi sommitale du boîtier
437 Ergot
- 440: Anneau pour la laisse
441 Fente pour l'ergot
442 Trou pour extrémité de la tige mobile
- 460: Câble

- 530: Enrouleur
531 Boîtier de l'enrouleur
532 Axe d'enroulement
533a,b Tige fixe
534 Tige mobile
- 540: Arceau
- 560: Câble

## Revendications

1. Collier (100, 200, 300, 400) pour animal domestique constitué d'une lanière (120, 220, 260, 320, 360, 460) dont les extrémités sont jointes pour former un collier fermé, des moyens de réglage (130, 230, 330, 430, 530) étant prévus pour régler la circonférence du collier en position fermée et des moyens de retenue étant prévus pour maintenir le collier dans la position fermée à la circonférence souhaitée, **caractérisé en ce que** les moyens de réglage comprennent un premier enrouleur automatique (130, 230, 330, 430, 530) sur lequel peut s'enrouler une première extrémité (121, 260, 360, 460, 560) de la lanière.

2. Collier (200, 300, 400) selon la revendication précédente, **caractérisé en ce que** les moyens de réglage comprennent un second enrouleur automatique (230, 330, 430, 530) sur lequel peut s'enrouler la seconde extrémité de la lanière (260, 360, 460, 560).

3. Collier (200, 300, 400) selon la revendication précédente, **caractérisé en ce que** le premier enrouleur et le second enrouleur sont constitués par un seul et même enrouleur (230, 330, 430, 530).

4. Collier (200, 300, 400) selon l'une des revendications précédentes, **caractérisé en ce que** la lanière est constituée d'une bande principale (220, 320) dont la première (221, 321) ou les deux extrémités (221, 222, 321, 322) se prolongent chacune par un câble (260, 360, 460, 560) qui seul vient s'enrouler sur le premier ou sur chacun des enrouleurs (230, 330,430,560).

5. Collier (200, 400) selon la revendication précédente, **caractérisé en ce que** le ou les câbles (260, 460) passent chacun à travers une sangle (270) dont la première extrémité est fixée à la bande principale (220) et la seconde est fixée au niveau de l'enrouleur correspondant (230, 430), la sangle (270) étant au moins aussi longue que le câble (260, 460) et traversée plusieurs fois par celui-ci de telle sorte qu'en position serrée, la sangle se replie au moins partiellement en formant un accordéon.

6. Collier (200, 400) selon la revendication précédente, **caractérisé en ce que** lorsqu'il comprend deux sangles (270), les extrémités de celles-ci opposées à la bande principale (220) se rejoignent sur la face extérieure du collier (200), les deux sangles (270) ne formant de préférence qu'une seule pièce.

7. Collier (300) selon l'une des revendications précédentes, **caractérisé en ce que** le collier comprend une première bande secondaire (390) située sur la face intérieure du collier et fixée au premier ou au moins à l'un des enrouleurs (330), de préférence de façon symétrique par rapport aux enrouleurs, les extrémités de la bande secondaire étant munies chacune d'un passant (382) entourant la lanière (320) de façon à que cette dernière puisse coulisser librement dans le passant.

8. Collier (300) selon l'une des revendications précédentes, **caractérisé en ce que** le collier comprend une deuxième bande secondaire (380) située sur la face extérieure du collier et fixée au premier ou au moins à l'un des enrouleurs (330), de préférence de façon symétrique par rapport aux enrouleurs (330) ou, s'il y en a une, à la première bande secondaire (390), les extrémités (381) de la bande secondaire étant munies chacune d'un passant (382) entourant la lanière (320) de façon à que cette dernière puisse coulisser librement dans le passant (382).

9. Collier (300) selon la revendication précédente, **caractérisé en ce que** la première bande secondaire (390) et la deuxième bande secondaire (380) ne forment qu'une seule pièce, de préférence en matière plastique.

10. Collier (400) selon l'une des revendications précédentes, **caractérisé en ce que** le ou les enrouleurs (430, 530) sont munis chacun de moyens (433, 434, 533a, 533b, 534) pour bloquer la lanière ou le câble (460, 560) dans la position souhaitée.

11. Collier (400) selon la revendication précédente, **caractérisé en ce que** les moyens pour bloquer la lanière ou le câble (460, 560) comprennent deux tiges parallèles entre elles (433, 434, 533a, 533b, 534), de préférence parallèles ou perpendiculaire à l'axe (432, 532) de l'enrouleur automatique correspondant, la première tige (433, 533a, 533b) étant fixe tandis que la seconde (434, 534) peut se translater radialement entre deux positions, une première position débloquée éloignée de la première tige fixe (433, 533a, 533b), laissant la lanière ou le câble (460, 560) libre de s'enrouler ou se dérouler de l'enrouleur (432, 532), et une seconde position bloquée proche de la première tige fixe (433, 533a, 533b), bloquant entre elles la lanière ou le câble (460, 560) qui ne peut plus s'enrouler ou se dérouler de l'enrouleur automatique, des moyens (440, 540) étant prévus pour translater la tige mobile (434, 534) entre les deux positions extrêmes.

12. Collier selon la revendication précédente, **caractérisé en ce que** les moyens pour bloquer la lanière ou le câbles (560) comprennent une deuxième tige fixe (533b), parallèle à la première tige fixe (533a), les deux tiges fixes (533a, 533b) étant séparées l'une de l'autre d'une distance inférieure à la largeur de la tige mobile (534).

13. Collier (100, 200, 300, 400) selon l'une des revendications précédentes, **caractérisé en ce que** l'un des enrouleurs (130, 230,330, 430, 530) est muni de moyens (140, 240, 340, 440, 540) pour fixer une laisse, de préférence un anneau, et/ou **en ce qu'**une bande de protection (233) est placée sur la face intérieure du collier au niveau du ou des enrouleurs (230).

14. Collier selon l'une des revendications précédentes, **caractérisé en ce qu'il** comprend une seconde lanière dont les extrémités peuvent être jointes pour former un collier fermé autour du thorax de l'animal, ladite seconde lanière étant munie de moyens de réglage pour régler la circonférence de cette seconde lanière en position fermée et de moyens de retenue étant prévus pour maintenir la seconde lanière dans la position fermée à la circonférence souhaitée, les moyens de réglage comprenant un enrouleur automatique sur lequel peut s'enrouler une première extrémité de la seconde lanière.

15. Collier selon l'une des revendications précédentes, **caractérisé en ce qu'**il est muni d'au moins une bande décor amovible, cette bande décor amovible étant constituée de préférence par la seconde bande secondaire (380) et/ou par une bande distincte pouvant se fixer sur la seconde bande secondaire (380) et/ou par un bande distincte pouvant se fixer sur la bande principale (220, 320).

16. Collier selon l'une des revendications 7 à 15, **caractérisé en ce que** des moyens de guidage (370, 385, 385') sont prévus entre la bande principale (320) et la première et/ou la deuxième bandes secondaires (380, 390), ces moyens de guidage étant de préférence constitués par deux éléments en I, en U (371, 371') ou en S reliés ensembles par l'extrémité de leur branches à l'aide de deux tiges de liaison (372, 373), les premières branches (374, 374') des U (371, 371') ou des S, ou les premières extrémités des I, passant chacune à travers une fente (385) réalisée dans l'une au moins des bandes secondaires (380, 390), les autres branche (375, 375') des U (371, 371') ou des S, ou les deuxièmes extrémités des I, passant chacune à travers un trou réalisé à l'extrémité de la bande principale (320), les tiges de liaison (372, 373) étant fixées à l'extrémité des branches (374, 374', 375, 375') des U (371, 371') ou des S ou aux extrémités des I.
